Europäisches Patentamt

European Patent Office

Office européen des brevets

(19)

(11) Numéro de publication: **0 156 693**
**A1**

(12)

# DEMANDE DE BREVET EUROPEEN

(21) Numéro de dépôt: 85400359.7

(22) Date de dépôt: 26.02.85

(51) Int. Cl.⁴: **H 02 H 9/04**
**H 04 B 9/00**

(30) Priorité: 05.03.84 FR 8403381

(43) Date de publication de la demande:
02.10.85 Bulletin 85/40

(84) Etats contractants désignés:
DE GB IT

(71) Demandeur: Connan, Jean-Louis
Appartment AD 222 rue d'Anjou ZUP
F-22300 Lannion(FR)

(71) Demandeur: Huiban, Jean-Yves
Ker-Squivel-Izilian, PLOULECH
F-22300 Lannion(FR)

(72) Inventeur: Connan, Jean-Louis
Appartment AD 222 rue d'Anjoū ZUP
F-22300 Lannion(FR)

(72) Inventeur: Huiban, Jean-Yves
Ker-Squivel-Izilian, PLOULECH
F-22300 Lannion(FR)

(74) Mandataire: Martinet & Lapoux
62, rue des Mathurins
F-75008 Paris(FR)

(54) Dispositif de protection contre des perturbations électriques entre un terminal et une ligne telephonique.

(57) Le dispositif de protection (1) assure à tout instant une isolation électrique entre un terminal (TL) et une ligne téléphonique (TR), sans modification du terminal, et protège un usager du terminal contre toute surtension, par exemple créée par la foudre, transmise par la ligne. Le dispositif comprend des guides optiques (22T, 22R) transmettant bidirectionnellement des signaux notamment de parole, à multifréquence et de données et assurant l'isolation entre deux interfaces (3, 4) reliées au terminal et à la ligne. Une interface (4) est alimentée par le courant de téléalimentation de la ligne et l'autre interface (3) est alimentée par le secteur (S). Le dispositif de protection peut également comprendre des tiges isolantes mobiles (22C, 22A) pour commander des commutateurs (42T, 42R; 34) pour la prise de ligne par le terminal et pour reproduire dans le terminal un signal d'appel cadencé transmis par la ligne.

EP 0 156 693 A1

./...

FIG. 3

- 1 -

## DISPOSITIF DE PROTECTION CONTRE DES PERTURBATIONS ELECTRIQUES
### ENTRE UN TERMINAL ET UNE LIGNE TELEPHONIQUE

La présente invention concerne d'une manière générale la protection d'usagers de terminaux téléphoniques et/ou télématiques contre des surtensions transmises par lignes téléphoniques, occasionnées par la foudre notamment.

Durant une communication, un usager est en liaison avec une ligne téléphonique desservant un terminal par l'intermédiaire d'un combiné ou d'un clavier inclus dans le terminal. Dans les terminaux actuels, téléphoniques et/ou télématiques, un moyen de protection incluant des parafoudres reliés à la terre est prévu au niveau de la jonction du terminal et de la ligne téléphonique. Lorsque la prise de terre est défaillante, une surtension créée dans la ligne téléphonique par des perturbations électriques, telles que foudre ou contact à une ligne électrique, est transmise à l'usager par un organe du terminal, combiné ou clavier, manipulé par l'usager. Cette surtension engendre des troubles graves chez l'usager, dus par exemple aux chocs acoustiques produits par l'ébranlement du combiné. En outre, un courant important peut traverser le corps de l'usager et se traduire au pire par le foudroiement de l'usager.

Un poste téléphonique dit sans fil n'isole l'usager et le combiné par rapport à la ligne téléphonique que pendant la communication après la phase de décrochage et avant la phase de raccrochage. Cette isolation est assurée par la liaison bidirectionnelle, généralement à rayonnement infrarouge, entre une première interface incluse dans le combiné mobile et une seconde interface incluse dans un module fixe et reliée à la ligne téléphonique. Cependant, la seconde interface puise son énergie d'alimentation sur le secteur électrique à travers un transformateur, afin de fournir l'énergie suffisante pour alimenter des moyens d'émission et de réception de signaux optiques dans la seconde interface. Ainsi, au moment du décrochage et du raccrochage, l'usager se trouve en contact avec le module fixe, relié à la fois à la ligne téléphonique et au secteur à travers le transformateur. Les risques de transmettre de l'énergie de perturbations électriques à l'usager sont donc accrus par rapport à ceux présentés par un poste téléphonique classique parfaitement isolé du secteur et puisant son énergie à partir du courant de téléalimentation de la ligne téléphonique.

Par ailleurs, la liaison infrarouge est prévue pour une longue distance, de l'ordre de plusieurs mètres. La liaison infrarouge nécessite dans les deux interfaces des moyens d'émission et de réception de signaux optiques mettant en oeuvre des modulations et des démodulations très complexes afin de minimiser l'influence de perturbations optiques dans la liaison infrarouge.

Le but de la présente invention est de fournir un dispositif de protection contre des perturbations électriques interconnecté entre un terminal et une ligne téléphonique qui assure à tout instant une isolation électrique à très haute tension entre le terminal en contact avec l'usager et la ligne téléphonique, sans aucune modification supplémentaire du terminal.

A cette fin, selon l'invention, un dispositif de protection comprenant une première interface reliée au terminal et une seconde interface reliée à la ligne téléphonique, les première et seconde interfaces comprenant des premiers moyens d'émission pour convertir des premiers signaux électriques transmis par le terminal en des premiers signaux optiques et des premiers moyens de réception pour convertir les premiers signaux optiques en les premiers signaux électriques à transmettre vers la ligne téléphonique, et les seconde et première interfaces comprenant des seconds moyens d'émission pour convertir des seconds signaux électriques transmis par la ligne téléphonique en des seconds signaux optiques et des seconds moyens de réception pour convertir les seconds signaux optiques en les seconds signaux électriques à transmettre vers le terminal, est caractérisé en ce qu'il comprend des premiers et seconds moyens d'isolation électrique pour guider les premiers et seconds signaux optiques et en ce que la première interface comprend des premiers moyens pour alimenter en courant à partir du secteur ledit terminal, les premiers moyens d'émission et les seconds moyens de reception, et la seconde interface comprend des seconds moyens pour alimenter en courant à partir du courant de téléalimentation de la ligne téléphonique les premiers moyens de réception et les seconds moyens d'émission.

Ainsi, selon l'invention, la première interface et le terminal sont alimentés par le secteur et la seconde interface est alimentée par le courant de téléalimentation dans la ligne téléphonique, ce qui assure une parfaite isolation entre le secteur au niveau du terminal de l'usager et la ligne téléphonique à travers les moyens pour guider les signaux optiques.

Selon une caractéristique de l'invention, les moyens pour guider les signaux optiques sont sous la forme de tubes en matériau isolant à parois opaques ou de fibres optiques s'étendant entre des boîtiers contenant les interfaces. Les signaux optiques sont alors protégés contre toute perturbation optique extérieure. Dans ces conditions, les moyens d'émission peuvent appliquer directement, sans aucune modulation intermédiaire, les signaux électriques en bande de base à des photoémetteurs. Le coût du dispositif de protection selon l'invention est ainsi plus faible que celui pour un poste téléphonique sans fil à liaison infrarouge.

Selon un autre aspect de l'invention, les moyens pour guider les signaux optiques ont une longueur de quelques dizaines de centimètres afin d'assurer une isolation électrique au moins supérieure à 300 kV entre les deux interfaces. La faible longueur des moyens pour guider ne nécessite ainsi qu'une faible puissance optique de rayonnement des moyens d'émission. En particulier, le courant de téléalimentation dans la ligne téléphonique, de l'ordre de 30 mA, est suffisant pour alimenter les moyens d'émission et de réception dans la seconde interface.

Selon une autre caractéristique de l'invention, les moyens d'émission et de réception à la fois dans les première et seconde interfaces ne sont alimentés que pendant les périodes de fonctionnement du terminal afin de réduire la consommation énergétique du dispositif de protection.

D'autres avantages et caractéristiques de l'invention apparaîtront plus clairement à la lecture de la description suivante de plusieurs réalisations de l'invention en référence aux dessins annexés correspondants dans lesquels :

- la Fig. 1 est un bloc-diagramme détaillé d'un dispositif de protection selon l'invention, interconnecté entre un terminal et une ligne téléphonique ;

- la Fig. 2 est une vue en perspective des boîtiers contenant les première et seconde interfaces du dispositif entre lesquels s'étendent des guides optiques et une tige isolante ;

- la Fig. 3 est un bloc-diagramme d'un dispositif de protection selon l'invention permettant de reproduire un signal d'appel transmis par la ligne téléphonique dans le terminal ; et

- la Fig. 4 est une vue en perspective analogue à la Fig. 2, relative au dispositif montré à la Fig. 3.

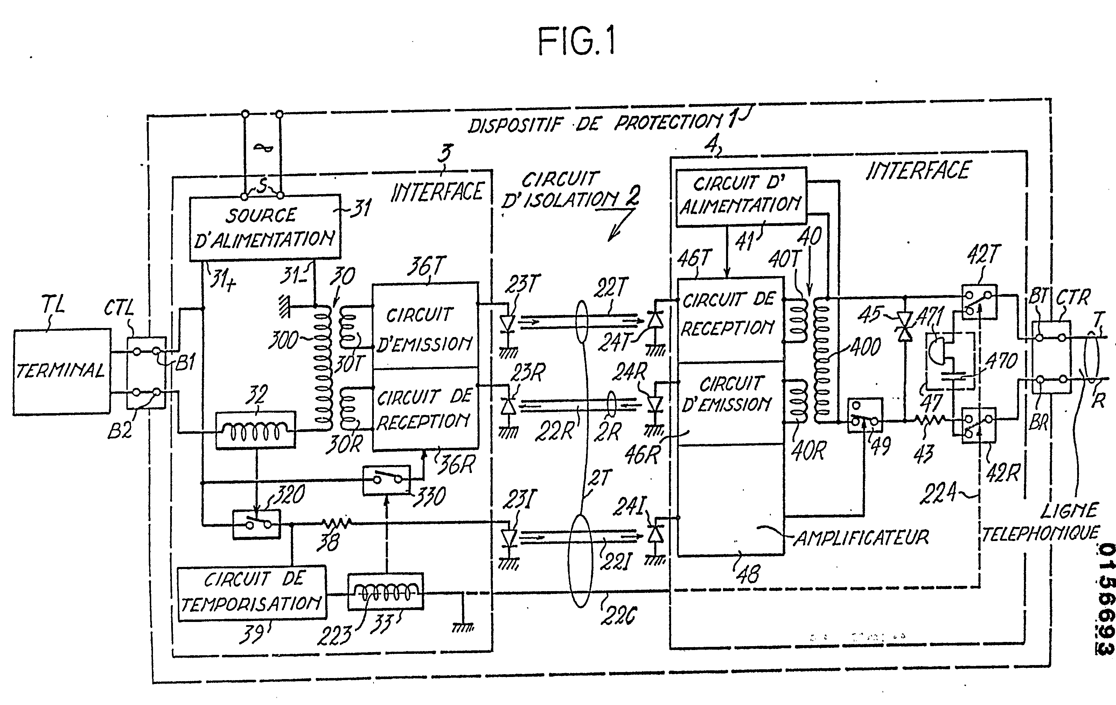

Comme montré à la Fig. 1, le dispositif de protection 1 selon l'invention est un quadripôle interconnecté entre deux -bornes d'un terminal TL et des extrémités de deux fils T et R d'une ligne téléphonique.

D'une manière générale, le terminal TL peut être une installation téléphonique d'abonné ayant un ou plusieurs postes téléphoniques, ou un simple poste téléphonique. Le terminal TL peut être une installation téléphonique et télématique d'abonné desservant par un bus commun un ou plusieurs postes téléphoniques et un ou plusieurs terminaux télématiques connus à clavier et écran. La ligne téléphonique TR peut être une ligne de raccordement d'abonné rattachée à un central téléphonique et/ou télématique. Cependant, la ligne téléphonique peut être une ligne téléphonique spécialisée ou non au niveau d'un central téléphonique et le terminal peut être un équipement de surveillance tel qu'un appareil de mesure, par exemple pour tester des défauts de transmission dans la ligne.

Dans la suite, on suppose que le terminal peut transmettre et recevoir tous types de signaux à impulsions ou à multifréquence dans la bande de fréquence audio, typiquement comprise entre 300 Hz et 3 400 Hz ou 4 000 Hz. Les signaux à impulsions sont des signaux de numérotation transmis par un poste téléphonique à cadran. De tels signaux de numérotation sont composés de trains d'impulsions convenablement calibrées représentatifs des chiffres d'un numéro d'appel. Chaque impulsion se traduit classiquement par une ouverture de boucle de la ligne téléphonique. Lorsqu'un poste téléphonique est doté d'un générateur multifréquence et d'un clavier, des signaux de numérotation à multifréquence sont transmis et résultent généralement de la combinaison de deux fréquences parmi huit. Des signaux de données peuvent être également transmis dans la ligne téléphonique et sont issus de signaux numériques ·soumis à une modulation série bivalente obtenue par déplacement de fréquence au moyen de modems, une fréquence moyenne nominale étant assignée à chacune des deux directions de transmission.

Tous les signaux définis précédemment sont véhiculés suivant les deux directions de transmission entre le terminal TL et la ligne téléphonique TR à travers le dispositif de protection 1. Deux premières bornes B1 et B2 du dispositif 1 sont raccordées à deux bornes du terminal TL à travers un premier conjoncteur classique CTL analogue à une prise téléphonique. Deux secondes bornes BT et BR du dispositif 1 sont raccordées aux extrémités des fils T et R de la ligne téléphonique à travers un second conjoncteur CTR.

Le dispositif de protection 1 comprend un circuit optoélectronique d'isolation électrique 2 à voies distinctes pour les deux directions de transmission, et de part et d'autre du circuit 2, une première interface 3 du côté du terminal TL et une seconde interface 4 du côté de la ligne téléphonique TR. Les deux interfaces 3 et 4 comprennent des coupleurs hybrides, par exemple sous la forme de transformateurs différentiels 30 et 40, pour adapter les transmissions bidirectionnelles sur deux fils au niveau du terminal TL et de la ligne TR à une voie de transmission 2T et à une voie de réception 2R dans le circuit 2.

Dans la première interface 3, un enroulement primaire 300 du transformateur 30 est interconnecté entre une borne négative 31_ d'une source d'alimentation 31 et une borne de bobine 32 d'un premier relais. L'autre borne positive 31$_+$ de la source 31 et une autre borne de la bobine 32 sont reliées aux bornes du terminal TL à travers les bornes B1 et B2 et le conjoncteur CTL respectivement. La source d'alimentation 31 est classique et a deux bornes d'entrée S reliée au secteur. Elle fournit le courant de boucle nécessaire au fonctionnement du terminal TL et de la première interface 3. De préférence, la source 31 comprend une batterie de secours pour alimenter le terminal TL en cas de coupure du secteur.

Des premiers signaux électriques de parole et à multifréquence transmis par le terminal TL sont prélevés par un premier enroulement secondaire 30T du transformateur différentiel 30 formant une entrée d'un premier support de transmission de la voie de transmission 2T. Le premier support de transmission comprend dans le circuit d'isolation 2, un photoémetteur 23T relié à l'enroulement 30T à travers un circuit d'émission 36T, un photorécepteur 24T et un guide optique 22T. Le circuit d'émission 36T et le photoémetteur 23T constituent des premiers moyens d'émission pour convertir les premiers signaux électriques en des premiers signaux optiques. Le guide 22T convoie les premiers signaux optiques émis par le photoémetteur 23T vers le photorécepteur 24T correspondant aux premiers signaux électriques de parole et à multifréquence transmis par le terminal TL. La sortie du premier support de transmission est constituée par un premier enroulement secondaire 40T du transformateur différentiel 40 dans la seconde interface 4, relié au photorécepteur 24T à travers un circuit de réception 46T. Le photorécepteur 24T et le circuit de réception 46T constituent des premiers moyens de réception pour convertir les premiers signaux optiques en les premiers signaux électriques. Les signaux de parole et à multifréquence transmis par le terminal TL sont ensuite véhiculés vers la ligne TR à travers un enroulement primaire 400 du transformateur 40. Le fil T est relié à une borne de l'enroulement 400 à travers un contact mobile et un premier contact stationnaire d'un premier commutateur 42T. Le fil R est relié à l'autre borne de l'enroulement 400 à travers un contact mobile et un premier contact stationnaire d'un second commutateur 42R et à travers une résistance de protection 43. Une double diode de Zener 45 est interconnectée aux bornes de l'enroulement primaire 400. Les éléments 43 et 45 constituent des moyens de protection des circuits de l'interface 4, destinés à l'écrêtage de surtensions éventuelles.

Des seconds signaux électriques de parole et à multifréquence transmis par la ligne téléphonique TR vers le terminal TL empruntent la voie de réception 2R qui est composée d'une manière analogue au premier support de transmission. L'entrée et la sortie de la voie de réception 2R sont formées par des seconds enroulements secondaires 40R et 30R des transformateurs différentiels 30 et 40. La voie de réception 2R comprend un photoémetteur 24R relié à l'enroulement 40R à travers un circuit d'émission 46R, un photorécepteur 23R relié à l'enroulement 30R à travers un circuit de réception 36R, et un guide optique 22R. Le guide 22R convoie des seconds signaux optiques émis par le photoémetteur 24R vers le photorécepteur 23R, correspondant aux signaux de parole et à multifréquence transmis par la ligne TR.

Dans le circuit d'isolation 2, les photoémetteurs, tels que les photoémetteurs 23T et 24R, sont par exemple des diodes photoémettrices telles que diodes électroluminescentes (LED) émettant dans le proche infrarouge avec une longueur d'onde de l'ordre de 950 nm. De préférence, les diodes sont polarisées par un courant continu modulé par des signaux en bande de base correspondant aux signaux de parole et à multifréquence et fonctionnent en régime linéaire. Ces conditions sont assurées par des amplificateurs connus constituant les circuits d'émission 36T et 46R. De même, les circuits de réception 46T et 36R sont constitués par des amplificateurs connus.

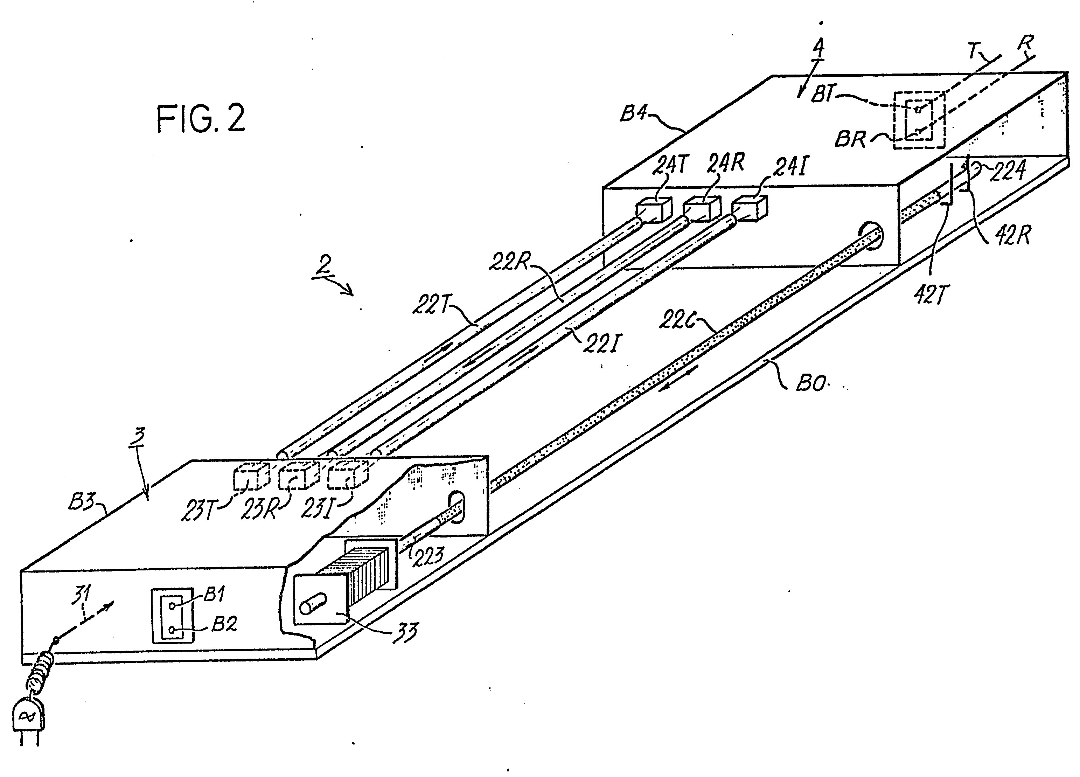

Les guides optiques 22T et 22R ont une longueur fonction de l'isolation électrique que l'on souhaite obtenir. L'isolation galvanique ainsi obtenue entre les deux interfaces 3 et 4, c'est-à-dire entre le terminal TL et la ligne TR, est supérieure à celle conférée par des photocoupleurs optoélectroniques connus. Par exemple, la longueur des guides optiques 22R et 22T est approximativement égale à 30 cm pour une isolation électrique souhaitée de tension à 900 kV. Etant donné la faible longueur des guides optiques, un courant de polarisation des diodes 23T et 24R de l'ordre de 5 mA est suffisant. Les guides optiques 22T et 22R sont constitués par des tubes en matériau isolant à parois opaques ayant des extrémités fixées à des embases-supports contenant les photoémetteurs et photorécepteurs, comme montré schématiquement à la Fig. 2. Selon une autre variante, les guides optiques 22T et 22R sont constitués par des fibres optiques dont les extrémités sont positionnées en face des photoémetteurs et photorécepteurs dans des boîtiers connus. Les photorécepteurs 24T et 23R sont par exemple des éléments photosensibles à jonction tels que phototransistors ou photodiodes. Comme montré à la Fig. 2, les interfaces 3 et 4 sont logées dans de petits boîtiers B3 et B4 fixés sur le fond d'un boîtier isolant BO. Les guides 22T et 22R s'étendent parallèlement entre les boîtiers B3 et B4.

Les circuits dans la seconde interface 4, tels que les circuits d'émission 46R et de réception 46T, sont alimentés par un circuit d'alimentation 41 qui prélève l'énergie d'alimentation nécessaire à partir du courant de téléalimentation de la ligne téléphonique TR. Le circuit d'alimentation 41 est un circuit connu comprenant un redresseur, et a des bornes reliées respectivement aux bornes de l'enroulement primaire 400 du transformateur 40. Ainsi, la seconde interface 4 est alimentée par le courant de téléalimentation dans la ligne téléphonique TR, et la première interface 3 et le terminal TL sont alimentés par le secteur. La ligne téléphonique est ainsi complètement isolée du secteur grâce au circuit d'isolation 2, et toute surtension élevée, due notamment à la foudre, apparaissant dans la ligne TR ne peut qu'endommager la seconde interface 4 sans détérioration du terminal TL et de la première interface 3 et sans gêne de l'usager.

Dans la seconde interface 4, les commutateurs 42T et 42R jouent le rôle de crochets commutateurs d'un poste téléphonique classique. Cependant, les commutateurs 42T et 42R peuvent être supprimés lorsque le terminal est un appareil à relier en permanence à la ligne téléphonique TR. Des seconds contacts stationnaires des commutateurs 42T et 42R constituent les bornes d'un circuit d'appel 47 comprenant un condensateur 470 et une sonnerie d'appel 471. Selon l'invention, des moyens également isolant les deux interfaces 3 et 4 dans le dispositif de protection 1 sont prévus pour commander les commutateurs 42T et 42R lors des opérations de décrochage et de raccrochage classiques d'un poste téléphonique inclus dans le terminal TL, ou plus généralement lors des opérations de mise en marche et d'arrêt du terminal TL correspondant à l'établissement d'une communication et à la rupture d'une communication.

Les moyens pour commander les commutateurs 42T et 42R comprennent la bobine 32 du premier relais déjà cité, un contact de fermeture 320 commandé par le premier relais, une bobine 33 d'un second relais et un contact de fermeture 330 commandé par le second relais inclus dans la première interface 3, ainsi qu'une tige mobile isolante 22C traversant le circuit 2. Le contact 320 et la bobine 33 sont en série entre les bornes $31_+$ et $31_-$ de la source d'alimentation 31. Le contact 330 relie la borne $31_+$ à des bornes d'alimentation des circuits d'émission 36T et de réception 36R. La tige 22C est translatable parallèlement aux guides optiques 22T et 22R entre les deux boîtiers B3 et B4 contenant les interfaces 3 et 4, comme montré schématiquement à la Fig. 2. La tige 22C est composée d'un tronçon central en matière isolante entre les deux boîtiers B3 et B4 et de deux tronçons métalliques 223 et 224 solidaires des extrémités du tronçon isolant et coulissant dans les boîtiers des interfaces 3 et 4. Le tronçon métallique 223 de la tige 22C constitue une armature du relais 33. L'autre tronçon métallique 224 de la tige 22C est solidaire des contacts mobiles des commutateurs 42T et 42R.

Le premier relais 32 est activé dès que la boucle de courant dans la première interface 3 est fermée suite à la mise en marche du terminal TL correspondant au début d'une période de fonctionnement du terminal. La fermeture de la boucle de courant est captée par la bobine 32 qui ferme le contact 320. La fermeture du contact 320 se traduit par l'activation du second relais 33. Le contact 330 est fermé pour alimenter les circuits 36T et 36R. La tige isolante 22C est translatée pour que les commutateurs 42T et 42R relient les fils T et R à l'enroulement primaire 400 et aux bornes du circuit d'alimentation 41 et déconnectent le circuit d'appel 47 . Les circuits d'émission 46R et de réception 46T dans la seconde interface 4 sont ainsi alimentés par le circuit 41 dès la prise de la ligne TR, en même temps que les circuits d'émission 36T et de réception 36R dans la première interface 3 sont alimentés par la source d'alimentation 31. Les circuits 36T, 36R, 46T et 46R sont ainsi alimentés uniquement pendant une communication.

A la fin de la période de fonctionnement du terminal, c'est-à-dire lors de l'arrêt du terminal correspondant à la rupture de la communication, l'ouverture de la boucle de courant dans l'interface 3 et le terminal TL met au repos les premier et second relais, ce qui ouvre les contacts 320 et 330, translate en sens inverse la tige 22C, et provoque les contacts mobiles dans les commutateurs 42T et 42R à être déconnectés des premiers contacts stationnaires et à être connectés aux seconds contacts stationnaires ce qui boucle la ligne téléphonique TR à travers le circuit d'appel 47. Les circuits 36T, 36R, 46T et 46R ne sont plus alimentés.

Le dispositif de protection 1 tel que décrit ci-dessus est destiné à un terminal pour lequel les signaux de numérotation sont des signaux à multifréquence. Comme déjà dit, de tels signaux traversent le circuit d'émission 36T et le circuit de réception 46T via le premier support de transmission 23T - 22T - 24T de la voie de transmission 2T.

Lorsque le terminal TL délivre des signaux de numérotation en code à impulsions, la voie de transmission 2T comprend un troisième support de transmission pour reproduire les fermetures et ouvertures de boucle dans la seconde interface 4. Le troisième support de transmission est composé d'éléments analogues à ceux du premier support de transmission, savoir un photoémetteur 23I, un guide optique 22I et un photorécepteur 24I. Le photoémetteur 23I est polarisé à travers le contact 320 et une résistance 38 dans l'interface 3. Le photorécepteur 24I est relié à une entrée d'un amplificateur 48 dont la sortie commande un rupteur 49 dans l'interface 4. Le rupteur 49 est interconnecté dans l'un des fils de la ligne TR, par exemple entre la borne commune à la résistance 43 et une anode de la double diode 45 et la borne commune à une borne de la source d'alimentation 41 et une borne de l'enroulement primaire 400, du côté du fil R. Le rupteur 49 peut être un contact de fermeture ou un transistor à effet de champ.

Pour la réalisation du dispositif 1 destiné à un terminal délivrant des signaux de numérotation en code par impulsions, l'interface 3 comprend également un circuit de temporisation 39, sous la forme d'un intégrateur, interconnecté entre le contact 320 et la bobine 33.

Chaque impulsion de numérotation correspondant à une ouverture de boucle de courant dans l'interface 3 et le terminal TL est détectée par la bobine 32 du premier relais qui ouvre momentanément le contact 320. Le circuit de temporisation 39 inhibe l'ouverture de boucle afin que le second relais 33 demeure activé pendant l'ouverture de boucle et les commutateurs 42T et 42R ne changent pas d'état et maintiennent la prise de la ligne TR. L'ouverture de la boucle est retransmise sous la forme d'une période d'occultation brève par le troisième support de transmission 23I - 22I - 24I. L'amplificateur 48 ouvre alors brièvement le rupteur 49 qui reproduit ainsi classiquement une ouverture de boucle de courant dans la ligne TR. Ainsi, le photoémetteur 23I constitué également par une diode photoémettrice, retransmet des impulsions lumineuses au rythme des impulsions de numérotation reproduites par le rupteur 49, en assumant une isolation électrique des interfaces 3 et 4.

Selon une autre réalisation, les signaux de paroles et à multifréquence délivrés par le terminal TL et par la ligne TR ne modulent pas directement l'émission des diodes photoémettrices 23T et 24R mais sont d'abord modulés par des impulsions qu'elles-mêmes modulent l'émission des diodes photoémettrices. La modulation d'impulsion peut être une modulation d'impulsion en position ou une modulation d'impulsion en largeur. Dans ce cas, les circuits d'émission 36T et 46R sont remplacés par des modulateurs d'impulsion et les circuits de réception 36R et 46T sont remplacés par des démodulateurs d'impulsion. L'une des interfaces, telle que l'interface 3, contient une horloge à la fréquence d'échantillonnage de 8 kHz. Le signal d'horloge est utilisé aussi bien dans le modulateur 36T pour moduler les signaux délivrés par le terminal TL, que dans le démodulateur 36R pour démoduler les signaux reçus par le photorécepteur 23R. L'autre interface 4 comprend un circuit de récupération d'horloge pour reproduire le signal d'horloge qui est utilisé pour la modulation d'impulsion du signal délivré par la ligne TR dans le modulateur 46R. Ainsi, les modulations et démodulations effectuées dans les deux interfaces 3 et 4 sont synchrones.

Cependant, on notera que la modulation d'impulsion augmente le coût du dispositif de protection, par rapport à une modulation directe de l'émission des photoémetteurs par les signaux de parole et à multifréquence. La modulation d'impulsion est généralement utilisée dans des transmissions à infrarouge longues pour lesquelles il convient d'atténuer toutes perturbations extérieures sur les signaux optiques.

Par ailleurs, la modulation d'impulsion permet de supprimer le troisième support de transmission 23I - 22I - 24I de la voie de transmission. En effet, les impulsions de numérotation peuvent être modulées par le modulateur 36T et être reconstituées par le démodulateur 46T. Dans ce cas, pendant les ouvertures de boucle dans l'interface 3 et le terminal TL, l'émission d'impulsions modulantes par la diode 23T est bloquée. Dans le démodulateur 46T, chaque fermeture de boucle est reconstituée au moyen d'une bascule monostable redéclenchable à chaque front montant d'une impulsion reçue et ayant une constante de temps plus grande que la période d'échantillonnage égale à 125 µs.

Selon d'autres réalisations, la modulation d'impulsion peut être remplacée par toute autre modulation connue, telle que modulation de fréquence ou modulation d'amplitude.

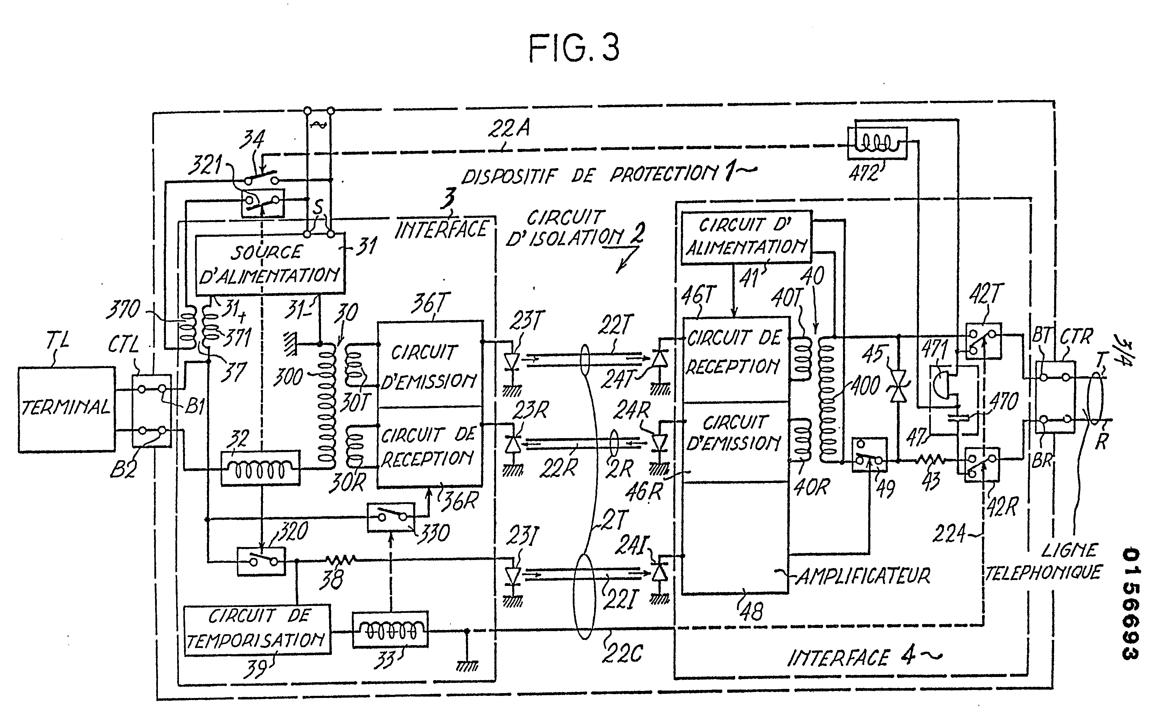

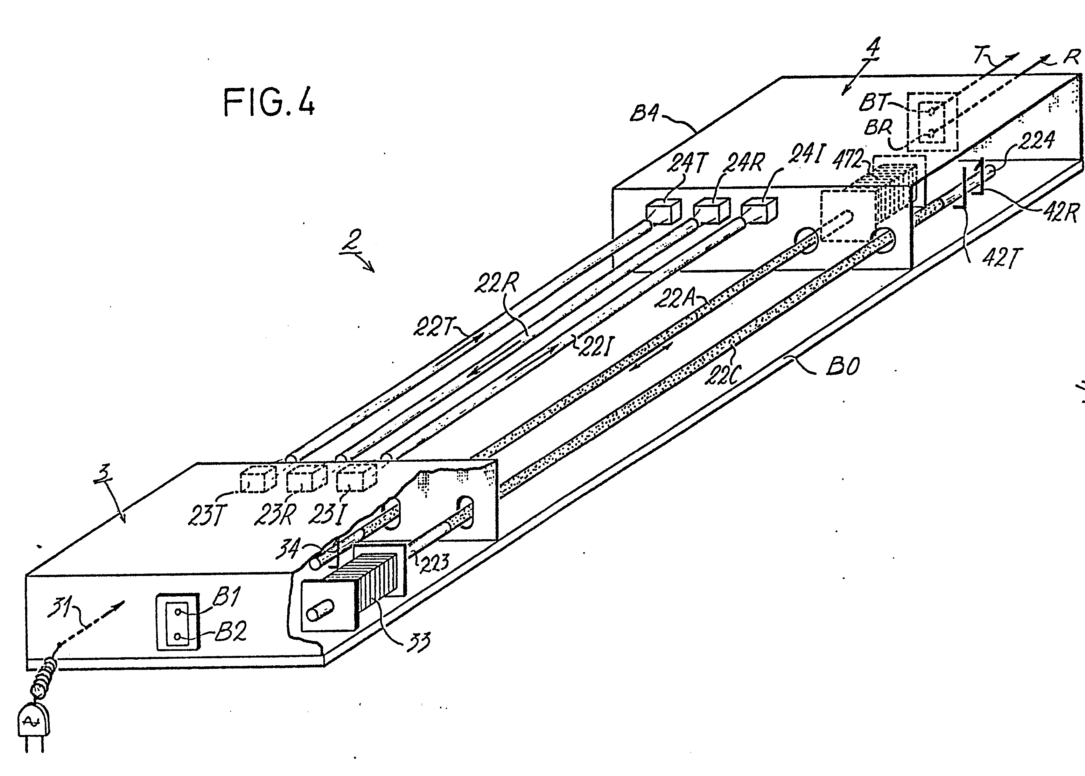

Selon un mode de réalisation modifié par rapport au mode de réalisation décrit précédemment sont prévus des moyens pour transmettre un signal d'appel cadencé de la ligne TR vers le terminal TL à travers le dispositif de protection 1. Ce mode de réalisation modifié est illustré aux Figs. 3 et 4 dans lesquelles on retrouve tous les éléments déjà décrits, inclus dans le circuit d'isolation 2 et les interfaces 3 et 4.

Dans la seconde interface 4, une bobine de relais 472 est en parallèle avec la sonnerie d'appel 471 ou remplace la sonnerie d'appel. Dans la première interface 3 sont ajoutés un transformateur 37 ainsi qu'un contact d'appel 34 et un contact d'ouverture 321. Un enrouleur secondaire 371 du transformateur 37 relie la borne $31_+$ de la source d'alimentation 31 à la borne B1 du conjoncteur CTL. Un enroulement primaire 370 du transformateur 37 et les contacts 34 et 321 sont en série dans une branche disposée en parallèle aux bornes d'entrée de secteur S de la source d'alimentation 31. Le contact 321 est commandé par la bobine de relais 32 et est ouvert en même temps que la fermeture du premier contact 320 suite à la mise en fonctionnement du terminal TL simulant le décrochage d'un poste téléphonique classique. Une partie mobile du contact 34 est actionnée par une extrémité d'une seconde tige mobile à majeure partie isolante 22A traversant le circuit d'isolation 2. La tige 22A est analogue à la tige 22C et parallèle à celle-ci comme montré schématiquement à la Fig. 4. Une autre extrémité métallique de la tige 22A constitue une armature du relais d'appel 472 dans l'interface 4.

Ainsi, un signal d'appel cadencé transmis par la ligne TR active le relais 472 qui produit une translation en va-et-vient de la tige 22A et de la partie mobile du contact 34 au rythme des interruptions du signal d'appel. Le contact 321 étant fermé, le contact 34 reproduit les interruptions périodiques du signal d'appel sous la forme d'interruptions périodiques du courant alternatif du secteur S qui sont transmises vers le terminal TL à travers le transformateur 37 pour exciter une sonnerie d'appel incluse dans le terminal TL. La mise en fonctionnement du terminal TL ferme la boucle de courant dans l'interface 3, ce qui excite le relais 32 et par suite, ferme le contact 320 et ouvre le contact 321. L'ouverture du contact 321 interrompt le courant d'appel dans l'interface 3 en même temps que le circuit d'appel 47 est déconnecté de la ligne TR par basculement des commutateurs 42T et 42R établi par le relais 33 activé par la fermeture du contact 320. Des signaux de numérotation, de parole ou de données peuvent être alors transmis comme décrit en référence aux Figs. 1 et 2.

Selon une autre variante, lorsque la source d'alimentation 31 comprend une batterie tampon, la batterie alimente un oscillateur produisant un signal alternatif aux bornes de la branche comprenant les contacts 34 et 321 et l'enroulement primaire 370. Dans cette branche, le courant du secteur est remplacé par le signal alternatif produit par l'oscillateur et le signal d'appel produit dans l'interface 3 n'est plus affecté par des pannes éventuelles du secteur.

L'invention selon les différents modes de réalisation décrits ci-dessus permet d'équiper, de manière simple et peu onéreuse, chaque domicile d'abonné téléphonique avec un boîtier de protection BO remplaçant la prise de terre actuellement utilisée dont le coût est élevé.

Lorsque la ligne téléphonique est une ligne numérique à quatre fils, l'adaptation d'une ligne à deux fils à une ligne à quatre fils est supprimée et le dispositif de protection ne comprend plus de transformateurs différentiels 30 et 40. Si la ligne téléphonique est une ligne comprenant une voie de données et de parole numérique à quatre fils et une voie de signalisation numérique à quatre fils, le circuit d'isolation du dispositif de protection comprend alors deux paires de voie de transmission et de voie de réception, telles que la paire de voies 23T - 22T - 24T et 24R - 22R - 23R.

Selon une autre variante, la ligne téléphonique peut être composée d'un câble coaxial ou de deux câble coaxiaux à large bande assignés aux deux directions de transmission. Dans ce cas, le terminal peut comprendre un visiophone, un vidéophone, un récepteur de télévision ou un magnétoscope par exemple.

<u>R E V E N D I C A T I O N S</u>

1 - Dispositif de protection contre des perturbations électriques interconnecté entre un terminal (TL) et une ligne téléphonique (TR), ledit dispositif (1) comprenant une première interface (3) reliée au terminal (TL) et une seconde interface (4) reliée à la ligne téléphonique (TR), les première et seconde interfaces (3 ; 4) comprenant des premiers moyens d'émission (36T, 23T) pour convertir des premiers signaux électriques transmis par le terminal (TL) en des premiers signaux optiques et des premiers moyens de réception (24T, 46T) pour convertir les premiers signaux optiques en les premiers signaux électriques à transmettre vers la ligne téléphonique, et les seconde et première interfaces (4 ; 3) comprenant des seconds moyens d'émission (46R, 24R) pour convertir des seconds signaux électriques transmis par la ligne téléphonique (TR) en des seconds signaux optiques et des seconds moyens de réception (23R, 36R) pour convertir les seconds signaux optiques en les seconds signaux électriques à transmettre vers le terminal, caractérisé en ce qu'il comprend des premiers et seconds moyens d'isolation électrique (22T, 22R) pour guider les premiers et seconds signaux optiques et en ce que la première interface (3) comprend des premiers moyens (31) pour alimenter en courant à partir du secteur (S) ledit terminal (TL), les premiers moyens d'émission (36T, 23T) et les seconds moyens de réception (23R, 36R), et la seconde interface (4) comprend des seconds moyens (41) pour alimenter en courant à partir du courant de téléalimentation de la ligne téléphonique (TR) les premiers moyens de réception (24T, 46T) et les seconds moyens d'émission (46R, 26R).

2 - Dispositif conforme à la revendication 1, caractérisé en ce que la première interface (3) comprend des moyens (32, 320, 33) pour détecter le début et la fin d'une période de fonctionnement du terminal (TL) et des moyens (330) commandés par les moyens pour détecter le début et la fin du fonctionnement du terminal (32, 320, 33) pour relier les premiers moyens d'émission (36T, 23T) et les seconds moyens de réception (23R, 36R) aux premiers moyens pour alimenter (31) pendant le fonctionnement du terminal (TL) et en ce que la seconde interface (4) comprend des commutateurs (42T, 42R) commandés par les moyens pour détecter le début et la fin du fonctionnement du terminal (32, 320, 33) pour relier la ligne téléphonique (TR) aux premiers moyens de réception (24T, 46T), aux seconds moyens d'émission (46R, 24R) et aux seconds moyens pour alimenter (41) pendant le fonctionnement du terminal (TL).

3 - Dispositif conforme à la revendication 2, caractérisé en ce qu'il comprend une tige en partie isolante (22C) mobile entre les deux interfaces (3, 4), ayant une extrémité (224) pour déplacer des contacts mobiles desdits commutateurs (42T, 42R) et une autre extrémité (223) constituant une armature d'un relais (33) inclus dans les moyens (32, 320, 33) pour détecter le début et la fin d'une période de fonctionnement du terminal (TL).

4 - Dispositif conforme à l'une quelconque des revendications 1 à 3, caractérisé en ce qu'il comprend des moyens (39) pour maintenir l'alimentation des moyens d'émission et de réception (36T, 46T, 46R, 36R) lors d'ouvertures de boucles de courant produites par le terminal (TL) pendant la période de fonctionnement.

5 - Dispositif conforme à l'une quelconque des revendications 1 à 4, caractérisé en ce que la première interface (3) comprend des moyens (32, 320) pour détecter des fermetures de boucle de courant produites par le terminal (TL) et des troisièmes moyens d'émission (23I) alimentés par les premiers moyens pour alimenter (31) pour convertir des impulsions d'ouverture de boucle consécutives à une numérotation en des impulsions optiques, en ce que la seconde interface (4) comprend des troisièmes moyens de réception (24I, 48, 49) alimentés par les seconds moyens pour alimenter (41) pour convertir les impulsions optiques en des impulsions de fermeture de boucle de courant dans la ligne téléphonique (TR), et en ce que le dispositif (1) comprend des troisièmes moyens d'isolation électrique (22I) pour guider les impulsions optiques.

6 - Dispositif conforme à l'une quelconque des revendications 1 à 5, caractérisé en ce que les moyens pour guider des signaux et/ou des impulsions optiques sont des tubes en matériau isolant à parois opaques ou des fibres optiques (22T, 22R, 22I).

7 - Dispositif conforme à l'une quelconque des revendications dications 1 à 6, caractérisé en ce que les moyens d'émission (36T, 23T ; 46R, 24R ; 23I) appliquent directement sans aucune modulation intermédiaire les signaux électriques en bande de base (parole, multifréquence ou impulsion) à des photoémetteurs (23T ; 24R ; 23I).

8 - Dispositif conforme à l'une des revendications 1 à 7, caractérisé en ce qu'il comprend des moyens (472, 34, 37) pour convoyer un signal d'appel cadencé de la ligne (TR) vers le terminal (TL).

9 - Dispositif conforme à la revendication 8, caractérisé en ce que les moyens pour convoyer un signal d'appel cadencé comprennent des moyens (472) logés dans la seconde interface (4) pour détecter des interruptions du signal d'appel transmis par la ligne TR et des moyens (34, 37) logés dans la première interface (3) et commandés par les moyens pour détecter des interruptions du signal d'appel (472) pour reproduire les interruptions du signal d'appel sous la forme d'interruptions d'un signal alternatif établi dans la première interface (3).

10 - Dispositif conforme à la revendication 9, caractérisé en ce qu'il comprend une seconde tige en partie isolante (22A) mobile entre les deux interfaces (3, 4) ayant une extrémité constituant une armature d'un relais (472) inclus dans les moyens pour détecter des interruptions du signal d'appel et une autre extrémité déplaçant une partie mobile d'un contact (34) inclus dans les moyens pour reproduire (34, 37).

11 - Dispositif conforme à la revendications 10, caractérisé en ce que le relais (472) ayant une extrémité de la seconde tige (22A) pour armature est en parallèle à une sonnerie d'appel (471) incluse dans la seconde interface (4) ou remplace ladite sonnerie d'appel (471).

12 - Dispositif conforme à l'une quelconque des revendications 9 à 11, caractérisé en ce que la première interface (3) comprend des moyens (32, 321) pour interrompre la transmission des interruptions de signal alternatif vers le terminal (TL), tant que le terminal (TL) est en fonctionnement.

13 - Dispositif conforme à l'une quelconque des revendications 9 à 12, caractérisé en ce que le signal alternatif est produit directement par le secteur (S).

14 - Dispositif conforme à l'une quelconque des revendications 1 à 12, caractérisé en ce que les premiers moyens pour alimenter (31) comprennent une batterie.

15 - Dispositif conforme à l'une quelconque des revendications 9 à 12 et à la revendication 14, caractérisé en ce que la première interface (3) comprend des moyens alimentés par la batterie pour établir ledit signal alternatif.

16 - Dispositif conforme à l'une quelconque des revendications 1 à 15, caractérisé en ce que les moyens d'émission et de réception (36T, 23T, 23R, 36R ; 24T, 46T, 46R, 24R) dans chaque interface (3 ; 4) reçoivent et fournissent directement des signaux numériques transitant à travers la ligne du type numérique à quatre fils.

# FIG.1

FIG. 2

2/4

0156693

# FIG. 3

DISPOSITIF DE PROTECTION 1~

INTERFACE 3

CIRCUIT D'ISOLATION 2

22A

472

34
321
31
S
SOURCE D'ALIMENTATION
31+
371
370
37
300
30
30T
30R
32
320
38
330
36R
231
CIRCUIT DE TEMPORISATION
39
33

CIRCUIT D'EMISSION
36T
CIRCUIT DE RECEPTION

23T
23R
22T
24T
22R
2R
24R
2T
2AI
22I

CIRCUIT D'ALIMENTATION
41
40
46T
40T
CIRCUIT DE RECEPTION
CIRCUIT D'EMISSION
46R
40R
AMPLIFICATEUR
48

45
400
49
43
47
471
470
42T
42R
224
BT CTR
T
R
BR
LIGNE TELEPHONIQUE

TERMINAL
TL
CTL
B1
B2

INTERFACE 4~

3/4

0156693

FIG.4

## Office européen des brevets

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 707 190  (SIEMENS) <br> * Figure 3; revendications 1-3 * | 1 | H 02 H    9/04 <br> H 04 B    9/00 |
| A | EP-A-0 006 144  (SIEMENS) <br> * Figure 3; page 8, lignes 16-31 * | 1 | |

DOMAINES TECHNIQUES RECHERCHES (Int. Cl.4)

H 02 H
H 04 M
H 04 Q
H 04 B

Le présent rapport de recherche a été établi pour toutes les revendications

| Lieu de la recherche | Date d'achèvement de la recherche | Examinateur |
|---|---|---|
| LA HAYE | 20-05-1985 | KOLBE W.H. |